# EUROPÄISCHE PATENTANMELDUNG

(11) **EP 4 759 657 A1**
(43) Veröffentlichungstag der Anmeldung: **17.06.2026**
(21) Anmeldenummer: 25214303.7
(22) Anmeldetag: 07.11.2025
(51) Int. Cl.: B60W 30/12, B60W 30/14, B60W 50/08

(54) **SYSTEM MIT EINEM KRAFTFAHRZEUG UND MIT EINEM SERVER, SOWIE VERFAHREN ZUM BETRIEB DES SYSTEMS**

(30) Priorität: 13.12.2024 DE 102024137728
(71) Anmelder: Volkswagen Aktiengesellschaft, 38440 Wolfsburg (DE)
(72) Erfinder: Kaste, Jonas, 38440 Wolfsburg (DE); Stahl, Felix, 38440 Wolfsburg (DE); Aminev, Timur, 38440 Wolfsburg (DE)

(57) **Zusammenfassung**

Die Erfindung betrifft ein Verfahren zum Betrieb eines Systems (2) mit einem Kraftfahrzeug (4) sowie mit einem Server (6), wobei Schwarmdaten (D) mit Datensätzen (S) auf dem Server (6) bereitgestellt sind, wobei jeder Datensatz (S) eine, insbesondere dem aktuellen Ort des Kraftfahrzeugs (4) zugeordnete, Pfad (tᵢ) und eine, insbesondere dem aktuellen Ort des Kraftfahrzeugs (4) zugeordnete, Geschwindigkeit (vᵢ) darstellt, wobei anhand der Schwarmdaten (D) ein Schwarm-Pfad (t_{S}) und eine Schwarm-Geschwindigkeit (v_{S}) bestimmt werden, wobei ein dem Fahrer des Kraftfahrzugs (4) zugeordneter Identifikator (ID) bestimmt wird, wobei in Abhängigkeit des Identifikators (ID) eine Soll-Pfadabweichung (Δt_{Soll}) zum Schwarm-Pfad (tₛ) und/oder eine Soll-Geschwindigkeitsabweichung (Δv_{Soll}) zur Schwarm-Geschwindigkeit (v_{S}) bestimmt wird, wobei anhand der Soll-Pfadabweichung (Δt_{Soll}) und anhand des Schwarm-Pfads (tₛ) ein Soll-Pfad (t_{Soll}) für das Kraftfahrzeug (4) bestimmt wird, und/oder wobei anhand der Soll-Geschwindigkeitsabweichung (Δv_{Soll}) und anhand der Schwarm-Geschwindigkeit (v_{S}) eine Soll-Geschwindigkeit (v_{Soll}) für das Kraftfahrzeug (4) bestimmt wird, wobei das Kraftfahrzeug (4) in Abhängigkeit der Soll-Geschwindigkeit (v_{Soll}) und/oder des Soll-Pfads (t_{Soll}) anhand des Fahrerassistenzsystems (8) automatisch längs- und/oder querführt wird. Des Weiteren betrifft die Erfindung ein solches System (2).

## Beschreibung

Die Erfindung betrifft ein Verfahren zum Betrieb eines Systems, das ein Kraftfahrzeug mit einem Fahrerassistenzsystem zur automatischen Längs- und/oder Querführung sowie einen Server mit Schwarmdaten aufweist. Des Weiteren betrifft die Erfindung ein solches System.

Manche Kraftfahrzeuge weisen ein Fahrerassistenzsystem auf. Solche Fahrerassistenzsysteme dienen dazu, den Fahrer bei bestimmten Fahraufgaben zu unterstützen und/oder eine Fahraufgabe zu übernehmen. Beispielsweise stellt das Fahrerassistenzsystem eine Funktion für eine automatische Längsführung, beispielsweise im Rahmen eines Abstandstempomats, und/oder für eine automatische Querführung, beispielsweise im Rahmen einer Spurführung entlang einer Spurmitte, bereit.

Weiterhin ist es bekannt, sogenannte Schwarmdaten für das Fahrerassistenzsystem zu nutzen. Schwarmdaten sind dabei Daten, die von Kraftfahrzeugen bereitgestellt wurden. Die Daten stellen beispielsweise jeweils eine gefahrene Straße oder einen Ort, sowie eine Informationen über die Fahrt auf der Straße bzw. an dem Ort dar. Die Information wird dabei vom Kraftfahrzeug anhand eines Sensors und/oder einer Kamera bestimmt. Beispielsweise stellt die Information den auf der Straße tatsächlich gefahrenen Pfad (gefahrene Spur), insbesondere repräsentiert durch den Abstand zu einer Spurmarkierung der Straße, einen Geschwindigkeitsverlauf und/oder einen Beschleunigungsverlauf des Kraftfahrzeugs entlang des gefahrenen Pfads dar.

Beispielsweise kann anhand der Schwarmdaten die Verfügbarkeit eines bestehenden Fahrerassistenzsystems erhöht werden. So können Schwarmdaten verwendet werden, um Daten über den zu fahrenden Kurs (Pfad) abzuleiten und eine Spurführung entsprechend dieses abgeleiteten Kurses zu ermöglichen, auch wenn keine Spurmarkierungen auf der Straße vorhanden sind, die typischerweise zur Bestimmung des zu fahrenden Kurses verwendet werden.

Schwarmdaten haben weiterhin den Vorteil, dass diese Daten realer Fahrten umfassen. Somit können anhand der Schwarmdaten Daten oder Größen zur Steuerung des Kraftfahrzugs mittels des Fahrerassistenzsystems bestimmt werden, die ein vergleichsweise menschliches und vom Fahrer als vergleichsweise angenehm empfundenes Verhalten darstellen.

Unterschiedliche Fahrer können jedoch unterschiedliche Präferenzen aufweisen. So wird beispielsweise ein sportlicher Fahrer ein anderes Beschleunigungsverhalten als angenehm empfinden, als ein Fahrer, der eine kraftstoffsparende Fahrweise bevorzugt. Diese unterschiedlichen Präferenzen können auch bei der Verwendung von Schwarmdaten für das Fahrerassistenzsystem zu einer Verringerung dessen Akzeptanz durch den Fahrer führen.

In der DE 10 2021 207 781 A1 ist ein Verfahren zum Adaptieren einer assistierten oder automatisierten Fahrfunktion eines Fahrzeugs beschrieben. Beim Verfahren wird ein Fahrverhalten eines Fahrers des Fahrzeugs in wenigstens einer Fahrsituation erfasst und das erfasste Fahrverhaltens des jeweiligen Fahrers ausgewertet, um eine individuelle Fahrweise des jeweiligen Fahrers zu ermitteln. Weiterhin wird ein spezieller Parametersatz für die assistierte oder automatische Fahrfunktion des Fahrzeugs ermittelt, der eine der individuellen Fahrweise des jeweiligen Fahrers angepasste Fahrweise der assistierten oder automatisierten Fahrfunktion des Fahrzeugs bewirkt, und es wird der spezielle Parametersatz zum Modifizieren eines vorhandenen Parametersatzes der assistierten oder automatisierten Fahrfunktion des Fahrzeugs verwendet.

Aus der DE 10 2022 211 433 A1 ist ein Fahrerassistenzsystem für ein Fahrzeug bekannt, wobei das Fahrerassistenzsystem dazu eingerichtet ist, dass Steuergrößen und/oder Parameter des Fahrerassistenzsystems anhand von auswählbaren Fahrprofilen festgelegt werden können, wobei mindestens ein Fahrprofil auswählbar ist, bei dem die Steuergrößen und/oder Parameter des Fahrerassistenzsystems positionsabhängig mit Hilfe von Schwarmdaten festgelegt werden.

Der Erfindung liegt die Aufgabe zugrunde, ein besonders geeignetes Verfahren zum Betrieb eines Systems mit einem Kraftfahrzeug und mit einem Server anzugeben. Insbesondere soll anhand des Verfahrens eine automatische Längs- und/oder Querführung an ein Fahrverhalten des Fahrer anpassbar und/oder angepasst sein. Des Weiteren soll ein solches System angegeben werden.

Bezüglich des Verfahrens wird die Aufgabe durch die Merkmale des Anspruchs 1 erfindungsgemäß gelöst. Hinsichtlich des Systems wird die Aufgabe mit den Merkmalen des Anspruchs 10 erfindungsgemäß gelöst. Vorteilhafte Ausgestaltungen und Weiterbildungen sind Gegenstand der Unteransprüche. Dabei gelten die Ausführungen im Zusammenhang mit dem Verfahren sinngemäß auch für das System und umgekehrt.

Das Verfahren dient dem Betrieb eines Systems, welches ein Kraftfahrzeug mit einem Fahrerassistenzsystem für eine automatische Längs- und/oder Querführung sowie einen fahrzeugexternen Server aufweist. Dieses Kraftfahrzeug des Systems wird im Folgenden zur besseren Unterscheidbarkeit zu anderen Fahrzeugen auch als "Ego-Fahrzeug" bezeichnet.

Geeigneter Weise ist eine "automatische Längs- und/oder Querführung" eine assistierende Längs- oder Querführung entsprechend Level 1 der Norm SAE J3016, eine der teilautomatische Längs- und/oder Querführung entsprechend Level 2 der Norm SAE J3016, eine bedingt automatische Längs- und/oder Querführung entsprechend Level 3 der Norm SAE J3016, eine hochautomatische Längs- und/oder Querführung entsprechend Level 4 der Norm SAE J3016 und/oder eine vollautomatische Längs- und/oder Querführung Längs- und/oder Querführung entsprechend Level 5 der Norm SAE J3016. Analoges gilt zweckmäßig für "automatisch längs- und/oder quergeführt".

Beispielsweise wird das Kraftfahrzeug, insbesondere lediglich, anhand des Fahrerassistenzsystems längsgeführt, wobei der Fahrer die Querführung selbst durchführt. Weiter beispielsweise ist das Kraftfahrzeug, insbesondere lediglich, anhand des Fahrerassistenzsystems quergeführt, wobei der Fahrer die Längsführung selbst durchführt. Weiter beispielsweise ist das Kraftfahrzeug, insbesondere lediglich, anhand des Fahrerassistenzsystems sowohl längs- als auch quergeführt, wobei der Fahrer, beispielsweise zeitweise und/oder situationsabhängig, weder die Längsführung noch die Querführung durchführt.

Beispielsweise ist das Fahrerassistenzsystem ein Fahrerassistenzsystem gemäß dem Level 1 (Stufe 1) oder dem Level 2 (Stufe 2) gemäß der Norm SAE J3016.

Verfahrensgemäß sind auf dem Server Schwarmdaten bereitgestellt. Die Schwarmdaten wurden beispielsweise vorab von einer Vielzahl von Kraftfahrzeugen, beispielsweise umfassend das EGO-Fahrzeug, an den Server übertragen und/oder wurden anhand den von diesen Fahrzeugen übertragen Daten berechnet. Die Schwarmdaten umfassen dabei Datensätze, wobei jeder Datensatz einen, insbesondere dem aktuellen Ort des Ego-Fahrzeugs zugeordneten, Pfad und/oder eine, insbesondere dem aktuellen Ort des Ego-Fahrzeugs zugeordnete, Geschwindigkeit darstellt. Hierunter ist insbesondere zu verstehen, dass der Pfad und/oder die Geschwindigkeit selbst in den Datensätzen vorhanden sind oder jeweils anhand der Datensätze bestimmt werden können und zweckmäßig werden. Der aktuelle Ort des Kraftfahrzeugs wird insbesondere anhand eines Navigationssystems und/oder anhand von GPS (Global Positioning System) bestimmt.

Die Pfade der Datensätze der Schwarmdaten repräsentieren also jeweils einen, insbesondere am Ort des EGO-Fahrzeugs, zuvor gefahrenen Pfad. Beispielsweise wird der jeweilige Pfad anhand eines Abstands zu einer Spurmarkierung der Straße oder zu einem Straßenrand dargestellt. Beispielsweise ist der Pfad ein Parameter, insbesondere eine Zahl, der diesen Abstand repräsentiert.

Die Geschwindigkeiten der Datensätze der Schwarmdaten repräsentieren also jeweils eine Geschwindigkeit bei einer vorangehenden Fahrt, insbesondere am Ort des EGO-Fahrzeugs und/oder auf dem jeweiligen Pfad. Beispielsweise ist die Geschwindigkeit ein Parameter, insbesondere eine Zahl, der diese Geschwindigkeit repräsentiert.

Verfahrensgemäß wird, insbesondere anhand des Servers, ein Schwarm-Pfad und eine Schwarm-Geschwindigkeit anhand der Datensätze bestimmt. Geeigneter Weise wird ein Mittelwert der Geschwindigkeiten der Datensätze als die Schwarmgeschwindigkeit und ein Mittelwert der Pfade als der Schwarmpfad bestimmt.

Weiterhin wird, insbesondere vom EGO-Fahrzeug, zweckmäßig anhand dessen Fahrerassistenzsystems, ein dem Fahrer des Kraftfahrzeugs zugeordneter Identifikator bestimmt. Beispielsweise wird eine Identifikationsnummer des Fahrer als der Identifikator bestimmt. Hierzu wird zweckmäßig die Identität des Fahrers und die diesem zugeordnete Identifikationsnummer bestimmt. Der Fahrer wiederum wird in bekannter Weise beispielsweise anhand einer Gesichtserkennung, anhand einer Eingabe des Fahrers, an dessen Fingerabdruck, an dessen Kraftfahrzeugschlüssel und/oder anhand dessen Mobiltelefon erkannt.

Anschließend wird verfahrensgemäß in Abhängigkeit des Identifikators eine Soll-Pfadabweichung zum Schwarm-Pfad und/oder eine Soll-Geschwindigkeitsabweichung zur Schwarm-Geschwindigkeit bestimmt, insbesondere berechnet. Anhand der Soll-Pfadabweichung und anhand des Schwarm-Pfads wird ein Soll-Pfad für das EGO-Fahrzeug bestimmt. Hierzu wird beispielsweise der Schwarm-Pfad mit der Soll-Pfadabweichung multipliziert. Alternativ wird hierzu die Soll-Pfadabweichung zum Schwarm-Pfad addiert.

Zusätzlich oder alternativ zur Bestimmung des Soll-Pfads wird anhand der Soll-Geschwindigkeitsabweichung und anhand der Schwarm-Geschwindigkeit eine Soll-Geschwindigkeit für das EGO-Fahrzeug bestimmt, insbesondere berechnet. Hierzu wird beispielsweise die Schwarm-Geschwindigkeit mit der Soll-Geschwindigkeitsabweichung multipliziert. Alternativ wird hierzu die Soll-Geschwindigkeitsabweichung zur Schwarm-Geschwindigkeit addiert.

Anschließend wird das Kraftfahrzeug (Ego-Fahrzeug) anhand des Fahrerassistenzsystems in Abhängigkeit des Soll-Pfads und/oder in Abhängigkeit der Soll-Geschwindigkeit automatisch längsgeführt und/oder automatisch querführt. Zweckmäßig steuert das Fahrerassistenzsystem hierbei eine Bremse, einen Traktionsantrieb, und/oder eine Lenkung des Kraftfahrzeugs derart an, dass das Kraftfahrzeug mit der Soll-Geschwindigkeit und/oder auf dem Soll-Pfad fährt.

Zusammenfassend erfolgt eine automatische Längs- und/oder Querführung des Kraftfahrzeugs anhand des Fahrerassistenzsystems in Abhängigkeit des Identifikators und somit fahrerspezifisch. Auf diese Weise ist vorteilhaft eine automatische Längs- und/oder Querführung an den Fahrer anpassbar und/oder angepasst. Damit einhergehend wird vorteilhaft eine Akzeptanz einer Fahrt anhand des Fahrerassistenzsystems erhöht.

Gemäß einer besonders bevorzugten Ausgestaltung des Verfahrens wird die aktuelle Fahrsituation des EGO-Fahrzeugs bestimmt. Für die Bestimmung der aktuellen Fahrsituation wird zweckmäßig ein Deskriptor, also eine Kenngrößen und/oder eine Eigenschaft, des EGO-Fahrzeugs, ein Deskriptor der Fahrzeugumgebung, ein Deskriptor des Fahrers, ein Deskriptor einer geplanten oder aktuell gefahrenen Route, und/oder ein Deskriptor der Straße verwendet. Beispielsweise ist ein Deskriptor des EGO-Fahrzeugs eine Fahrzeugkategorie wie beispielsweise ein Kleinwagen oder ein Bus, eine Motorart wie beispielsweise ein Verbrennungsmotor oder ein Elektromotor, eine Restreichweite, eine Beladung, die Anzahl belegter Sitzplätze, oder ein gewähltes Fahrerprofil wie beispielsweise "Sport" oder "Komfort". Weiter beispielsweise ist ein Deskriptor der Fahrzeugumgebung das Lichtverhältnis, das Wetter, oder die Verkehrsdichte. Weiter beispielsweise ist ein Deskriptor des Fahrers dessen Alter, dessen Geschlecht oder dessen Fahrdistanz pro Jahr. Weiter beispielsweise ist ein Deskriptor der geplanten oder aktuell gefahrenen Route eine Länge der Route, eine Aufenthaltszeit des Fahrers im EGO-Fahrzeug, eine erlaubte Maximalgeschwindigkeit, eine Straßenkategorie wie beispielsweise Landstraße, Stadtstraße oder Autobahn, oder ein Kurvenverlauf. Weiter beispielsweise ist ein Deskriptor der Straße eine Zustand der Straße, eine Breite der Straße, ein Fahrbahnmaterial wie Teer oder Schotter oder Pflastersteine.

Die Deskriptoren sind beispielsweise jeweils vorgegeben oder, insbesondere mittels einer Eingabe des Fahrers, vorgebbar. Alternativ werden die Deskriptoren jeweils anhand von Sensordaten eines Sensors des EGO-Fahrzeugs bestimmt. Beispielweise werden Bilddaten einer Außenkamera des EGO-Fahrzeugs ausgewertet um eine Eigenschaft der Fahrzeugumgebung und/oder der Straße zu bestimmen.

Die aktuelle Fahrsituation wird also zweckmäßig anhand von Deskriptoren beschrieben, wobei die Deskriptoren jeweils eine Tatsache beschreibt, die das manuelle und/oder automatische Fahren des Kraftfahrzeug beeinflussen und/oder beeinflussen können. Ein Beispiel für eine Fahrsituation ist eine "Kurvenfahrt bei Nacht auf nassem Untergrund mit geringer Verkehrsdichte auf einer Landstraße".

Weiterhin wird bei dieser Ausgestaltung des Verfahrens die Soll-Pfadabweichung und/oder die Soll-Geschwindigkeitsabweichung in Abhängigkeit der aktuellen Fahrsituation bestimmt. Zusammenfassend wird also die die Soll-Pfadabweichung und/oder die Soll-Geschwindigkeitsabweichung in Abhängigkeit der aktuellen Fahrsituation und in Abhängigkeit des Identifikators bestimmt.

Gemäß einer geeigneten Ausgestaltung wird zur Bestimmung der Soll-Pfadabweichung und/oder der Soll-Geschwindigkeitsabweichung die aktuelle Fahrsituation zunächst klassifiziert. Mit anderen Worten wird die aktuelle Fahrsituation einer von mehreren vordefinierten Klassen zugeordnet. Diese Zuordnung erfolgt dabei zweckmäßig in Abhängigkeit der Deskriptoren.

Der Wert (also dessen Betrag und dessen Vorzeichen) der Soll-Pfadabweichung und/oder der Wert der Soll-Geschwindigkeitsabweichung wird dann der bei der Klassifizierung bestimmten Klasse zugeordnet. Also wird der der aktuellen Fahrsituation zugeordneten Klasse wiederum der Wert der Soll-Pfadabweichung und/oder der Wert der Soll-Geschwindigkeitsabweichung zugeordnet. Dabei ist der der Klasse zugeordnete Wert der Soll-Pfadabweichung und/oder der der Klasse zugeordnete Wert der Soll-Geschwindigkeitsabweichung abhängig vom Identifikator.

Geeigneter Weise wird zur Bestimmung der Soll-Pfadabweichung und/oder der Soll-Geschwindigkeitsabweichung eine Kennlinie oder ein Kennfeld verwendet. Diese Kennlinie oder dieses Kennfeld ordnet den Deskriptoren (oder in analoger Weise der anhand diesen bestimmten aktuellen Fahrsituation) und dem Identifikator die Soll-Pfadabweichung und/oder die Soll-Geschwindigkeitsabweichung zu.

Alternativ hierzu wird zur Bestimmung der Soll-Pfadabweichung und/oder der Soll-Geschwindigkeitsabweichung eine Support Vektor Machine (SVM) verwendet. Zweckmäßig erfolgt die Klassifizierung der aktuellen Fahrsituation anhand der Support Vektor Machine. Anschließend wird der derart klassifizierten Fahrsituation die Soll-Pfadabweichung und/oder die Soll-Geschwindigkeitsabweichung zugeordnet. Beispielsweise wird hierzu eine Tabelle oder eine Kennlinie oder ein Kennfeld verwendet.

Alternativ hierzu wird zur Bestimmung der Soll-Pfadabweichung und/oder der Soll-Geschwindigkeitsabweichung ein Decision Tree (Entscheidungsbaum) verwendet. Zweckmäßig erfolgt die Klassifizierung der aktuellen Fahrsituation anhand des Decision Tree. Hierbei wird zweckmäßig bei jedem Knoten des Decision Tree ein Deskriptor des EGO-Fahrzeugs, der Fahrzeugumgebung, des Fahrers, einer geplanten oder aktuell gefahrenen Route, und/oder der Straße abgefragt, wobei das sogenannte Blatt des Baums die Klasse definiert. Anschließend wird der derart klassifizierten Fahrsituation die Soll-Pfadabweichung und/oder die Soll-Geschwindigkeitsabweichung zugeordnet. Beispielsweise wird hierzu eine Tabelle oder eine Kennlinie oder ein Kennfeld verwendet.

Alternativ hierzu wird zur Bestimmung ein künstliches neuronales Netz verwendet. Beispielsweise erfolgt ebenfalls zunächst die Klassifizierung der aktuellen Fahrsituation anhand des künstlichen neuronalen Netzes. Alternativ hierzu werden dem künstlichen neuronalen Netz die Deskriptoren und der Identifikator als Eingangsgrößen zugeführt, wobei das künstliche neuronale Netz dazu ausgebildet und/oder dazu trainiert ist, die Soll-Pfadabweichung und/oder die Soll-Geschwindigkeitsabweichung als Ausgangsgröße(n) auszugeben.

Zusammenfassend erfolgt die Bestimmung der Soll-Pfadabweichung und/oder der Soll-Geschwindigkeitsabweichung anhand eines Algorithmus, der beispielsweise das künstliche neuronale Netz, die Support Vector Machine, den Decision Tree, die Zuordnung anhand der Tabelle, anhand des Kennfelds oder anhand der Kennlinie repräsentiert. Die Deskriptoren und der Identifikator bilden dabei die Eingangsgrößen für diesen Algorithmus, die Soll-Pfadabweichung und/oder die Soll-Geschwindigkeitsabweichung bilden die Ausgangsgrößen des Algorithmus. Weiter zusammenfassend stellt der Algorithmus ein Modell zur Bestimmung der Soll-Pfadabweichung und/oder die Soll-Geschwindigkeitsabweichung dar.

In vorteilhafter Ausgestaltung des Verfahrens bestimmt der Server die Soll-Pfadabweichung und/oder die Soll-Geschwindigkeitsabweichung. Im Vergleich zu einer Bestimmung der Soll-Pfadabweichung und/oder Soll-Geschwindigkeitsabweichung durch das Kraftfahrzeug, insbesondere durch dessen Fahrerassistenzsystem ist somit ein Rechenaufwand im Kraftfahrzeug reduziert. Weiterhin kann auf dem Server gespeichert werden und/oder wird auf dem Server gespeichert, welcher Wert für die Soll-Pfadabweichung und/oder welcher Wert für die Soll-Geschwindigkeitsabweichung dem Identifikator und/oder der aktuellen Fahrsituation zugeordnet wird. Das Modell zur Bestimmung der Soll-Pfadabweichung und/oder der Soll-Geschwindigkeitsabweichung kann also auf dem Server hinterlegt werden und/oder ist also auf dem Server hinterlegt. Auf diese Weise ist es ermöglicht, dass der Fahrer anhand dessen Identifikator dieses Modell auch mit mehreren Kraftfahrzeugen verwenden kann.

Zweckmäßig ist der Wert der Soll-Pfadabweichung und/der der Wert der Soll-Geschwindigkeitsabweichung, der dem Identifikator und/oder der aktuellen Fahrsituation zugeordnet wird, änderbar. Beispielsweise wird ein initialer Wert für die Soll-Pfadabweichung und/oder ein initialer Wert für die Soll-Geschwindigkeitsabweichung vorgegeben. Insbesondere wird der initiale Wert für die Soll-Pfadabweichung und/oder der initiale Wert für die Soll-Geschwindigkeitsabweichung derart gewählt, dass der Soll-Pfad dem Schwarmpfad entspricht und/oder dass die Soll-Geschwindigkeit der Schwarm-Geschwindigkeit entspricht.

Gemäß einer geeigneten Weiterbildung des Verfahrens jedoch wird der initiale Wert für die Soll-Pfadabweichung, also der Anfangswert für die Soll-Pfadabweichung, und/oder der initiale Wert für die Soll-Geschwindigkeitsabweichung, also der Anfangswert für die Geschwindigkeitsabweichung, anhand einer Eingabe des Fahrers, bestimmt. Die Eingabe erfolgt zweckmäßig mittels einer Eingabeeinrichtung des EGO-Fahrzeugs, wie beispielsweise einem Touchdisplay, einem Schalter, einem Knopf.

Beispielsweise füllt der Fahrer anhand der Eingabeeinrichtung einen Fragebogen aus, wobei anhand der Antworten in vordefinierter Weise, beispielsweise anhand einer vordefinierten Tabelle oder Kennlinie, der initiale Wert für die Soll-Pfadabweichung und/oder der initialer Wert für die Soll-Geschwindigkeitsabweichung bestimmt wird. Alternativ hierzu wählt der Fahrer anhand der Eingabe eines von mehreren vordefinierten Fahrerprofilen, wie beispielsweise "Comfort", "Eco", "Sport", aus, wobei den vordefinierten Fahrerprofilen jeweils ein vordefinierter Wert für die Soll-Pfadabweichung und/oder jeweils ein vordefinierter Wert für die Soll-Geschwindigkeitsabweichung zugeordnet ist. Beispielsweise werden diese Fahrerprofile zusätzlich dazu verwendet, um ein Dynamikverhalten des Antriebs des Kraftfahrzeugs einzustellen, wie beispielsweise ein Schaltverhalten eines Getriebes und/oder die Stärke einer Beschleunigung.

Vorteilhaft ist auf diese Weise ein hoher initialer Individualisierungsgrad für die automatische Längs- und/oder Querführung ermöglicht. Damit einhergehend wird vorteilhaft eine Akzeptanz einer Fahrt anhand des Fahrerassistenzsystems erhöht.

Gemäß einer vorteilhaften Weiterbildung des Verfahrens wird bei einer manuellen Fahrt, also während einer manuellen Fahrt, mit anderen Worten während das Kraftfahrzeugs nicht automatisch quer- und/oder längsgeführt wird, eine Ist-Geschwindigkeit (aktuelle Geschwindigkeit) des Kraftfahrzeugs und/oder ein Ist-Pfad (aktueller Pfad) bestimmt. Der Ist-Pfad wird beispielsweise in analoger Weise zu den Pfaden der Datensätze der Schwarmdaten anhand eines Abstands zu einer Spurmarkierung der Straße oder zu einem Straßenrand dargestellt. Weiterhin wird eine Ist-Geschwindigkeitsabweichung der Ist-Geschwindigkeit von der Schwarm-Geschwindigkeit und/oder eine Ist-Pfadabweichung des Ist-Pfads zum Schwarm-Pfad bestimmt. Zweckmäßig ist die Ist-Geschwindigkeitsabweichung die Differenz oder das Verhältnis aus der Ist-Geschwindigkeit und der Schwarm-Geschwindigkeit. Zweckmäßig ist die Ist-Pfadabweichung die Differenz oder das Verhältnis aus dem Ist-Pfad und dem Schwarm-Pfad.

Anschließend wird die Soll-Pfadabweichung und/oder die Soll-Geschwindigkeitsabweichung für eine zukünftige, also für eine zeitlich folgende, automatischen Längs- und/oder Querführung in Abhängigkeit der Ist-Geschwindigkeitsabweichung und/oder der Ist-Pfadabweichung eingestellt und/oder geändert. Zweckmäßig erfolgt dabei diese Einstellung und/oder Änderung lediglich in einer (zukünftigen) Fahrsituation, die der aktuellen Fahrsituation entspricht.

Vorteilhaft wird also das Modell und/oder die Bestimmungsweise und/oder der Wert für die Soll-Pfadabweichung und/oder für die Soll-Geschwindigkeitsabweichung anhand der manuellen Fahrt durch den Fahrer angepasst, also "trainiert". Folglich wird die automatische Längs- und/oder Querführung durch das Fahrerassistenzsystem vorteilhaft als angenehmer empfunden.

Gemäß einer vorteilhaften Weiterbildung wird während der aktuellen Fahrsituation für aufeinanderfolgende Zeitabschnitte, die jeweils eine vorgegebene erste Zeitdauer andauern, jeweils die Ist-Geschwindigkeitsabweichung und/oder die Ist-Pfadabweichung bestimmt. Die jeweilige erste Zeitdauer beträgt dabei beispielsweise 0,1 s, 1,0 s oder 10 s. Zusammenfassend wird während der aktuellen Fahrsituation in den Zeitabschnitten dieser Fahrsituation jeweils die Geschwindigkeitsabweichung und/oder die Ist-Pfadabweichung bestimmt.

Anschließend wird für eine zukünftige, also zeitlich folgende, automatische Längs- und/oder Querführung anhand der Ist-Geschwindigkeitsabweichungen dieser Zeitabschnitte und/oder anhand der Ist-Pfadabweichungen dieser Zeitabschnitte ein erster Anpassungsfaktor für die Soll-Pfadabweichung und/oder für die Soll-Geschwindigkeitsabweichung bestimmt. Beispielsweise werden hierbei lediglich eine vorgegebenen (erste) Anzahl der (zeitlich) letzten Zeitabschnitte verwendet und/oder die Bestimmung des ersten Anpassungsfaktors erfolgt lediglich dann, wenn eine Mindestanzahl solcher Zeitabschnitte vorliegt.

Beispielsweise wird als der erste Anpassungsfaktor ein Mittelwert der Ist-Geschwindigkeitsabweichungen und/oder der für den jeweiligen Zeitabschnitt mittleren Ist-Geschwindigkeitsabweichung, und/oder ein Mittelwert der Ist-Pfadabweichungen und/oder der für den jeweiligen Zeitabschnitt mittleren Ist-Pfadabweichung bestimmt.

Anschließend wird die Soll-Pfadabweichung und/oder die Soll-Geschwindigkeitsabweichung, vorzugsweise lediglich, für eine zweite Zeitdauer anhand des ersten Anpassungsfaktors angepasst. Insbesondere wird hierzu die Soll-Pfadabweichung und/oder die Soll-Geschwindigkeitsabweichung mit dem ersten Anpassungsfaktor multipliziert. Die Anpassung anhand des ersten Anpassungsfaktor ist bevorzugt also zeitlich begrenzt, also nicht dauerhaft. Die zweite Zeitdauer ist zweckmäßig größer als die erste Zeitdauer. Beispielsweise beträgt die zweite Zeitdauer 15 min, 1 h, 1 Tag oder bis zum Ende der Fahrt. Bei der Bestimmung des Soll-Pfads und/oder der Soll-Geschwindigkeit wird die Soll-Pfadabweichung und/oder die Soll-Geschwindigkeitsabweichung zweckmäßig mit dem ersten Anpassungsfaktor multipliziert. Damit einhergehend wird die Soll-Geschwindigkeit und/oder der Soll-Pfad beispielsweise vergrößert oder verkleinert. Zusammenfassend wird auf diese Weise eine kurzfristige Verhaltensweise oder Verhaltensänderung des Fahrers bei der Bestimmung des Soll-Kurses und/oder der Soll-geschwindigkeit berücksichtigt.

Zusätzlich oder alternativ hierzu wird die Soll-Pfadabweichung und/oder die Soll-Geschwindigkeitsabweichung anhand eines zweiten Anpassungsfaktors angepasst. Beispielsweise wird als der zweite Anpassungsfaktor ein Mittelwert der Ist-Geschwindigkeitsabweichungen und/oder der für den jeweiligen Zeitabschnitt mittleren Ist-Geschwindigkeitsabweichung, und/oder ein Mittelwert der Ist-Pfadabweichungen und/oder der für den jeweiligen Zeitabschnitt mittleren Ist-Pfadabweichung bestimmt. Dabei wird eine vorgegebenen zweite Anzahl der (zeitlich) letzten Zeitabschnitte verwendet, die größer als die erste Anzahl der Zeitabschnitte für die Bestimmung des ersten Anpassungsfaktors ist.

Beispielsweise beträgt die zweite Anzahl das 10-Fache, das 100-Fache oder das 1000-Fache der ersten Anzahl.

Bei der Bestimmung des Soll-Pfads und/oder der Soll-Geschwindigkeit wird die Soll-Pfadabweichung und/oder die Soll-Geschwindigkeitsabweichung zweckmäßig mit dem zweiten Anpassungsfaktor multipliziert. Damit einhergehend wird die Soll-Geschwindigkeit und/oder der Soll-Pfad beispielsweise vergrößert oder verkleinert. Die Anpassung der Soll-Pfadabweichung und/oder für die Soll-Geschwindigkeitsabweichung anhand des zweiten Anpassungsfaktors ist insbesondere dauerhaft. Auf diese Weise kann die automatische Längs- und/oder Querführung an vergleichsweise langfristiges Verhaltens des Fahrers angepasst werden.

Beispielweise kann, insbesondere durch den Fahrer anhand der Eingabeeinrichtung, gewählt werden, ob lediglich der erste Anpassungsfaktor oder lediglich der zweite Anpassungsfaktor oder ein gewichteter erster und zweiter Anpassungsfaktor für die Anpassung der Soll-Pfadabweichung und/oder die Soll-Geschwindigkeitsabweichung verwendet werden soll.

Gemäß einer vorteilhaften Weiterbildung wird die Soll-Pfadabweichung und/oder die Geschwindigkeitsabweichung bei, also während, einer automatischen Längs- und/oder Querführung für eine vorgegebene dritte Zeitdauer vergrößert oder verkleinert. Mit dieser Änderung geht eine entsprechende Änderung des Soll-Pfads und der Soll-Geschwindigkeit sowie eine entsprechend geänderte automatischen Längs- und/oder Querführung einher. Diese Änderung ist also zeitweise, mit anderen Worten nicht dauerhaft und/oder wird dabei automatisch durch das Fahrerassistenzsystem, also nicht durch den Fahrer, bewirkt.

Weiterhin wird, wenn kein manueller Eingriff des Fahrers in die Längs- und/oder Querführung des Kraftfahrzeugs während dieser Zeitdauer erfolgt, die Soll-Pfadabweichung und/oder die Soll-Geschwindigkeitsabweichung für eine zukünftige, also zeitlich folgende, automatische Längs- und/oder Querführung vergrößert oder verkleinert. Also wird die Soll-Pfadabweichung für eine zukünftige automatische Längs- und/oder Querführung um einen vorgegebenen Betrag vergrößert, wenn die Soll-Pfadabweichung während der dritten Zeitdauer vergrößert wurde und dabei kein manueller Eingriff erfolgt. Es wird die Soll-Pfadabweichung für eine zukünftige automatische Längs- und/oder Querführung um einen vorgegebenen Betrag reduziert, wenn die Soll-Pfadabweichung während der dritten Zeitdauer reduziert wurde und dabei kein manueller Eingriff erfolgt. Es wird die Soll-Geschwindigkeitsabweichung für eine zukünftige automatische Längs- und/oder Querführung um einen vorgegebenen Betrag vergrößert, wenn die Soll-Geschwindigkeitsabweichung während der dritten Zeitdauer vergrößert wurde und dabei kein manueller Eingriff erfolgt. Es wird die Soll-Geschwindigkeitsabweichung für eine zukünftige automatische Längs- und/oder Querführung um einen vorgegebenen Betrag reduziert, wenn die Soll-Geschwindigkeitsabweichung während der dritten Zeitdauer reduziert wurde und dabei kein manueller Eingriff erfolgt.

Unter einem manuellen Eingriff ist ein manuelles Abbrechen der automatischen Längs- und/oder Querführung und/oder ein manuelles Übersteuern, wie beispielsweise ein manuelles Überlenken und/oder ein manuelles Beschleunigen, zu verstehen.

Auf diese Weise wird also das Fahrerverhalten bei einer gezielten Änderung des Pfads und/oder der Fahrzeuggeschwindigkeit bewertet. Erfolgt ein Eingriff, wird Soll-Pfadabweichung und/oder die Soll-Geschwindigkeitsabweichung zweckmäßiger Weise nicht geändert, da dann davon ausgegangen werden kann, dass der Fahrer mit dieser Änderung nicht einverstanden ist. Erfolgt dagegen kein manueller Eingriff durch den Fahrer, wird davon ausgegangen, dass die Soll-Pfadabweichung und/oder die Soll-Geschwindigkeitsabweichung noch als angenehm empfunden wird. Anhand dieser gezielten Änderung ist also eine automatische Anpassung der Soll-Pfadabweichung und/oder der Soll-Geschwindigkeitsabweichung an das vom Fahrer gewünschte Verhalten ermöglicht.

Gemäß einer geeignete Weiterbildung wird zusätzlich oder alternativ hierzu bei einer automatischen Längs- und/oder Querführung bei einem manuellen Eingriff durch den Fahrer die Soll-Geschwindigkeitsabweichung für eine zukünftige automatische Längsführung vergrößert, wenn der manuelle Eingriff eine Vergrößerung der Fahrzeuggeschwindigkeit umfasst. Weiterhin wird geeigneter Weise die Soll-Geschwindigkeitsabweichung für eine zukünftige automatische Längsführung verkleinert, wenn der manuelle Eingriff eine Reduktion der Fahrzeuggeschwindigkeit umfasst. Weiterhin wird geeigneter Weise die Soll-Pfadabweichung für eine zukünftige automatische Querführung derart geändert, dass das Kraftfahrzeug weiter links fährt, wenn der manuelle Eingriff ein Lenken nach links umfasst. Weiterhin wird geeigneter Weise die Soll-Pfadabweichung für eine zukünftige automatische Querführung derart geändert, dass das Kraftfahrzeug weiter rechts fährt, wenn der manuelle Eingriff ein Lenken nach rechts umfasst.

Ein weiterer Aspekt der Erfindung betrifft ein solches System. Das System umfasst also das Kraftfahrzeug und den Server. Dabei weisen das Kraftfahrzeug und der Server Mittel zur Durchführung des Verfahrens in einer der oben dargestellten Varianten auf. Insbesondere umfassen das Kraftfahrzeug und der Server jeweils eine Steuereinheit (Controller) als die Mittel.

Beispielsweise ist oder umfasst dabei das Fahrerassistenzsystem des Kraftfahrzeugs dessen Steuereinheit.

Zweckmäßig umfasst der Server einen mit dessen Steuereinheit datenüberragungstechnisch verbundenes computerlesbares Medium, beispielswiese eine Festplatte, auf dem die Schwarmdaten hinterlegt sind. Weiterhin ist zweckmäßig auf dem computerlesbaren Medium des Servers sowie auf einem computerlesbaren Medium des Kraftfahrzeugs, beispielsweise eine weitere Festplatte, jeweils ein Computerprogramm gespeichert, wobei die Computerprogramme Befehle umfassen, die bewirken, dass das System die Schritte des Verfahrens ausführt.

Nachfolgend werden Ausführungsbeispiele der Erfindung anhand einer Zeichnung näher erläutert. Darin zeigen:
- Fig. 1: schematisch ein System, welches ein Kraftfahrzeug mit einem Fahrerassistenzsystem für eine automatische Längs- und/oder Querführung sowie einen kraftfahrzeugexternen Server aufweist, auf dem Schwarmdaten hinterlegt sind,
- Fig. 2: in einem Flussdiagramm einen Verfahrensablauf zum Betrieb des Systems.

Einander entsprechende Teile und Größen sind in allen Figuren stets mit gleichen Bezugszeichen versehen.

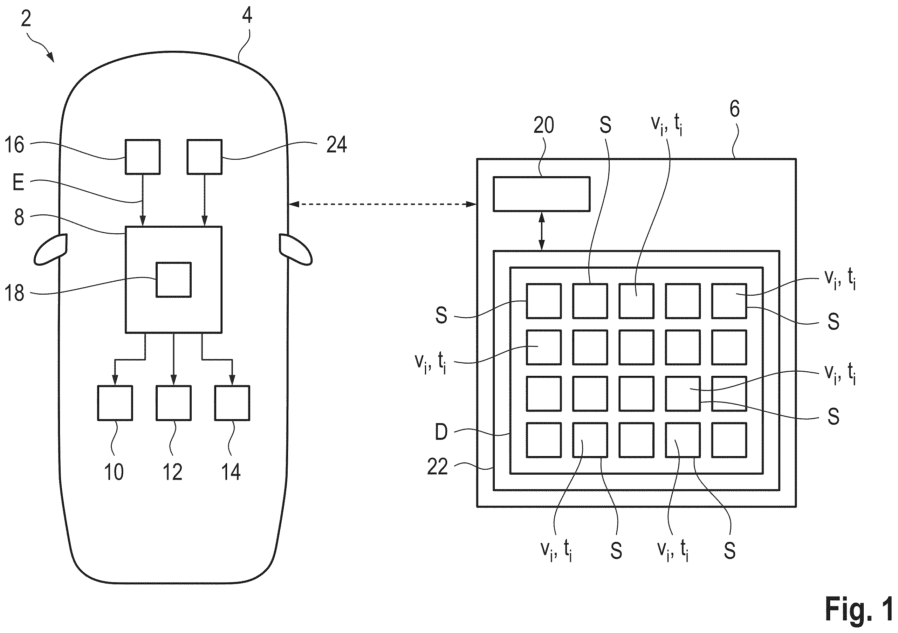

In der Fig. 1 ist schematisch ein System 2 dargestellt, welches ein Kraftfahrzeug 4 sowie einen zu diesem externen Server 6 umfasst. Das Kraftfahrzeug 4 ist signal- und/oder datenübertragungstechnisch mit dem Server 6 verbindbar und/oder verbunden.

Das Kraftfahrzeug 4 umfasst ein Fahrerassistenzsystem 8. Dieses ist dazu vorgesehen und eingerichtet, das Kraftfahrzeug 4 automatisch längs- und/oder querzuführen. Hierzu ist das Fahrerassistenzsystem 8 mit einem Antrieb 10, einer Bremse 12 und/oder einer Lenkung 14 des Kraftfahrzeugs 4 verbunden und kann den Antrieb 10, die Bremse 12 und/oder die Lenkung 14 ansteuern.

Das Kraftfahrzeug 4 umfasst zudem eine Eingabeeinrichtung 16, wie beispielsweise einen Knopf, einen Hebel oder ein Touchdisplay, so dass ein Benutzer des Kraftfahrzeugs 4 eine Eingabe E tätigen kann. Die Eingabeeinrichtung 16 ist dabei mit einer (ersten) Steuereinheit 18 des Kraftfahrzeugs 4 signal- und/oder datenübertragungstechnisch verbunden. Die Steuereinheit 18 ist oder umfasst zweckmäßig einen Controller. Diese ist gemäß dem hier dargestellten Ausführungsbeispiel in das Fahrerassistenzsystem 8 integriert. Alternativ hierzu ist die erste Steuereinheit 18 separat zum Fahrerassistenzsystem 8, aber signal- und/oder datenübertragungstechnisch mit diesem verbunden.

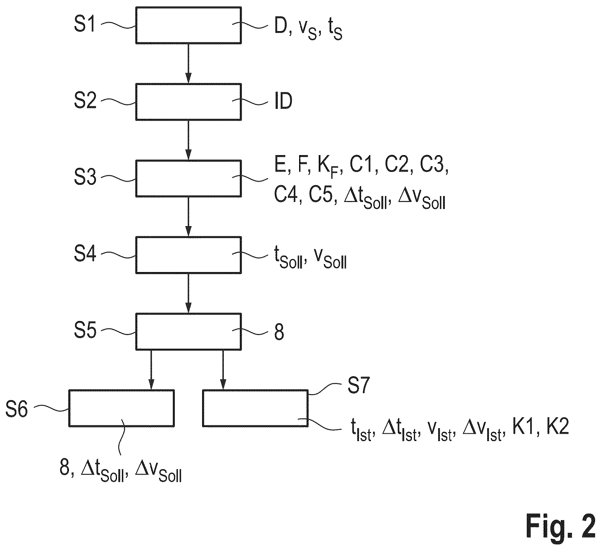

Der Server 6 umfasst eine (zweite) Steuereinheit 20, die insbesondere als Controller ausgebildet ist. Dabei ist das Kraftfahrzeug 4, insbesondere dessen erste Steuereinheit 18, datenübertragungstechnisch mit dem Server 6, insbesondere dessen zweiten Steuereinheit 20, verbindbar und/oder verbunden, was in der Fig. 1 anhand des strichliniert dargestellten Doppelpfeils repräsentiert ist. Die beiden Steuereinheiten 18, 20 bilden Mittel anhand denen das System 2 entsprechend des in der Figur 2 beschriebenen Verfahrens betrieben werden kann und/oder wird.

Weiterhin umfasst der Server 6 ein mit dessen Steuereinheit 20 verbundenes computerlesbares Medium 22 (Speicher 22), beispielsweise einen nicht-flüchtigen Speicher wie eine Festplatte. Auf dem computerlesbaren Medium 22 sind Schwarmdaten D gespeichert. Somit sind Schwarmdaten D auf dem Server 6 bereitgestellt. Die Schwarmdaten D umfassen dabei Datensätze S, insbesondere eine Vielzahl an Datensätzen S, von denen zum Zwecke einer besseren Übersicht lediglich 20 in der Fig. 1 dargestellt. Jeder der Datensätze S stellt einen dem aktuellen Ort des Kraftfahrzeugs 4 zugeordneten Pfad tᵢ und eine dem aktuellen Ort des Kraftfahrzeugs 4 zugeordnete Geschwindigkeit vᵢ dar.

Jeder dieser Pfade tᵢ repräsentiert also einen am Ort des Kraftfahrzeugs 4 vom Kraftfahrzeug 4 oder von einem anderen Kraftfahrzeug zuvor gefahrenen Pfad. Beispielsweise wird der jeweilige Pfad tᵢ anhand eines Abstands zu einer Spurmarkierung der Straße oder zu einem Straßenrand dargestellt. Beispielsweise ist der jeweilige Pfad anhand einer Größe, insbesondere anhand einer Zahl, dargestellt.

Jede dieser Geschwindigkeiten vᵢ repräsentiert also eine (Fahrzeug-)Geschwindigkeit vom Kraftfahrzeug 4 oder von einem anderen Kraftfahrzeug bei einer Fahrt am Ort des Kraftfahrzeugs 4. Beispielsweise ist die jeweilige Pfad anhand einer Größe, insbesondere anhand einer Zahl, dargestellt.

In der Fig. 2 ist ein Verfahren zum Betrieb des Systems 2 anhand eines Flussdiagramms dargestellt. Hierbei wird in einem ersten Schritt S1 zunächst der aktuelle Ort des Kraftfahrzeugs 4 bestimmt. Beispielsweise wird der aktuelle Ort anhand eines Navigationssystem 24 des Kraftfahrzeugs 4 und/oder anhand eines GPS-Systems des Kraftfahrzeugs 4 bestimmt und Daten über den Ort des Kraftfahrzeugs 2 an den Server 6 übertragen.

Anschließend wird im ersten Schritt S1 anhand des Servers 6, insbesondere anhand dessen zweiter Steuereinheit 20, anhand derjenigen Datensätze S der Schwarmdaten D, die dem aktuellen Ort des Kraftfahrzeugs 4 zugeordnet sind, ein sogenannter Schwarm-Pfad t_{S} und eine sogenannte Schwarm-Geschwindigkeit v_{S} bestimmt. Hierzu wird als die Schwarm-Geschwindigkeit v_{S} der Mittelwert der Geschwindigkeiten vᵢ dieser Datensätze S und als der Schwarmpfad der Mittelwert der Pfade tᵢ dieser Datensätze S bestimmt.

In einem zweiten Schritt S2, der zeitlich vor, nach oder während des ersten Schrittes S1 erfolgt, wird anhand des Fahrerassistenzsystems 8, ein Identifikator ID, insbesondere eine Identifikationsnummer, des Fahrers des Kraftfahrzeugs 4 bestimmt. Der Identifikator ID ist dabei derart ausgestaltet, dass diese eindeutig lediglich diesem Fahrer zugeordnet ist. Insbesondere ist jedem Fahrer ein individueller und einzigartiger Identifikator zugeordnet. Zur Bestimmung des Identifikators ID wird der Fahrer beispielsweise anhand einer Gesichtserkennung, anhand einer Eingabe des Fahrers, an dessen Fingerabdruck, an dessen Kraftfahrzeugschlüssel und/oder anhand dessen Mobiltelefon erkannt und dem erkannten Fahrer der Identifikator ID zugeordnet.

Anschließend wird in einem dritten Schritt S3 in Abhängigkeit des Identifikators ID eine Soll-Pfadabweichung Δt_{Soll} zum Schwarm-Pfad tₛ und/oder eine Soll-Geschwindigkeitsabweichung Δv_{Soll} zur Schwarm-Geschwindigkeit v_{S} bestimmt. Die Soll-Pfadabweichung Δt_{Soll} stellt also einen Soll-Wert für einen Wert (also dessen Betrag und dessen Vorzeichen) einer Abweichung vom Schwarm-Pfad tₛ oder einen Faktor für den Schwarm-Pfad tₛ dar. Zusätzlich oder alternativ stellt die Geschwindigkeitsabweichung Δv_{Soll} einen Soll-Wert für einen Wert einer Abweichung von der Schwarm-Geschwindigkeit v_{S} oder einen Faktor für die Schwarm-Geschwindigkeit vₛ dar.

Hierzu wird ein Deskriptor C1 des Kraftfahrzeugs 4, ein Deskriptor C2 der Fahrzeugumgebung, ein Deskriptor C3 des Fahrers, ein Deskriptor C4 einer geplanten oder aktuell gefahrenen Route, und/oder ein Deskriptor C5 der Straße bestimmt. Diese Deskriptoren C1, C2, C3, C4 und/oder C5 sind beispielsweise jeweils vorgegeben oder sind mittels einer Eingabe des Fahrers an der Eingabeeinrichtung 16 vorgebbar. Alternativ werden die Deskriptoren jeweils anhand von Sensordaten eines Sensors des Kraftfahrzeugs 4 bestimmt. Beispielweise werden Bilddaten einer Außenkamera des Kraftfahrzeugs 4 ausgewertet, um eine Eigenschaft der Fahrzeugumgebung und/oder der Straße als den jeweiligen Deskriptor C2 bzw. C5 zu bestimmen.

Der Identifikator ID, und die Deskriptoren C1, C2, C3, C4 und/oder C5 werden an den Server 6 übermittelt. Auf dem Server 6, insbesondere auf dessen computerlesbaren Medium 22, ist ein Modell hinterlegt, das zur Bestimmung der Soll-Pfadabweichung Δt_{Soll} und/oder der Geschwindigkeitsabweichung Δv_{Soll} vorgesehen und eingerichtet ist.

Für die Bestimmung der Soll-Pfadabweichung Δt_{Soll} und/oder der Geschwindigkeitsabweichung Δv_{Soll} wird zunächst anhand des Servers 6 eine aktuelle Fahrsituation F anhand der Deskriptoren C1, C2, C3, C4 und/oder C5 bestimmt. Hierzu wird eine Kennlinie oder ein Kennfeld verwendet, welcher einem der Deskriptoren oder den Deskriptoren C1, C2, C3, C4 und/oder C5 eine (Fahrsituations-)Klasse F, aus einer Anzahl vordefinierter Klassen K zuordnet. Alternativ hierzu wird eine Support Vektor Machine für die Klassifizierung, somit für die Zuordnung der Klasse K_{F} zu einem der Deskriptoren oder zu den Deskriptoren C1, C2, C3, C4 und/oder C5 verwendet.

Weiter alternativ ein Decision Tree verwendet für die Klassifizierung, somit für die Zuordnung der Klasse K_{F} zu einem der Deskriptoren oder zu den Deskriptoren C1, C2, C3, C4 und/oder C5 verwendet.

Weiter alternativ wird ein künstliches neuronales Netz für die Klassifizierung, somit für die Zuordnung der Klasse K_{F} zu einem der Deskriptoren oder zu den Deskriptoren C1, C2, C3, C4 und/oder C5 verwendet.

Das Modell ist oder umfasst also die Kennlinie, das Kennfeld, die Support Vector Machine, den Decision Tree oder das künstliche neuronale Netz.

Zusammenfassend wird die aktuelle Fahrsituation F klassifiziert, also einer Klasse K_{F} von mehreren vordefinierten Klassen K, die unterschiedliche Fahrsituationen repräsentieren, zugeordnet.

Der Wert (also dessen Betrag und dessen Vorzeichen) der Soll-Pfadabweichung Δt_{Soll} und/oder der Wert der Soll-Geschwindigkeitsabweichung Δv_{Soll} wird dann der bei der Klassifizierung bestimmten Klasse K_{F} zugeordnet. Dabei ist der der Klasse K_{F} zugeordnete Wert der Soll-Pfadabweichung Δt_{Soll} und/oder der der Klasse K_{F} zugeordnete Wert der Soll-Geschwindigkeitsabweichung Δv_{Soll} abhängig vom Identifikator ID. Beispielsweise ist eine Tabelle vordefiniert, welche der der aktuellen Fahrsituation entsprechenden Klasse K_{F} den Wert der Soll-Geschwindigkeitsabweichung Δv_{Soll} und/oder den Wert der Soll-Pfadabweichung Δt_{Soll} in Abhängigkeit des Identifikators ID zuordnet.

Der Wert der Soll-Geschwindigkeitsabweichung Δv_{Soll} und/oder der Wert der Soll-Pfadabweichung Δt_{Soll}, welcher in Abhängigkeit des Identifikators ID und der der aktuellen Fahrsituation F zugeordneten Klasse K_{F} bestimmt wird, ist dabei veränderbar und/oder vorgebbar.

Der Initiale Wert (Anfangswert) der Soll-Geschwindigkeitsabweichung Δv_{Soll} und/oder der Initiale Wert (Anfangswert) der Soll-Pfadabweichung Δt_{Soll}, ist dabei jeweils vordefiniert oder wird bevorzugt anhand einer Eingabe E des Fahrers an der Eingabeeinrichtung 16 bestimmt, wobei der Fahrer eine von mehreren Eingabeoptionen auswählt. Beispielsweise ist für jede Eingabeoption in vordefinierter Weise der initiale Wert der Soll-Geschwindigkeitsabweichung Δv_{Soll} und/oder der Initiale Wert der Soll-Pfadabweichung Δt_{Soll} vorbestimmt, so dass der initiale Wert der Soll-Geschwindigkeitsabweichung Δv_{Soll} und/oder der Initiale Wert der Soll-Pfadabweichung Δt_{Soll} entsprechend der Eingabe E ausgewählt wird.

Alternativ wird die Soll-Pfadabweichung Δt_{Soll} und/oder der Geschwindigkeitsabweichung Δv_{Soll} direkt anhand des beispielsweise als künstliches neuronales Netz ausgebildeten Modells berechnet.

Gemäß einer nicht weiter dargestellten Alternative wird die Soll-Pfadabweichung Δt_{Soll} und/oder die Soll-Geschwindigkeitsabweichung Δv_{Soll} in analoger Weise anhand der Deskriptoren C1, C2, C3, C4 und/oder C5 und anhand des Identifikators ID mittels des Fahrerassistenzsystems 8, insbesondere dessen Steuereinheit 18, bestimmt.

Zusammenfassend wird die Soll-Pfadabweichung Δt_{Soll} und/oder die Soll-Geschwindigkeitsabweichung Δv_{Soll} in Abhängigkeit der aktuellen Fahrsituation F und des Identifikators ID bestimmt.

Anschließend wird in einem vierten Schritt S4 anhand der Soll-Pfadabweichung Δt_{Soll} und anhand des Schwarm-Pfads tₛ ein Soll-Pfad t_{Soll} für das Kraftfahrzeug 4 anhand des Servers 6 bestimmt, und/oder es wird anhand der Soll-Geschwindigkeitsabweichung Δv_{Soll} und anhand der Schwarm-Geschwindigkeit v_{S} eine Soll-Geschwindigkeit v_{Soll} für das Kraftfahrzeug 4 anhand des Servers 6 bestimmt. Beispielsweise wird hierzu die Soll-Pfadabweichung Δt_{Soll} und der Schwarm-Pfad t_{S} addiert und/oder die Soll-Geschwindigkeitsabweichung Δv_{Soll} und die Schwarm-Geschwindigkeit v_{S} addiert.

Der Soll-Pfad t_{Soll} und/oder die Soll-Geschwindigkeit v_{Soll} wird an das Kraftfahrzeug 4, insbesondere an dessen Fahrerassistenzsystem 8 übertragen.

Gemäß einer nicht weiter dargestellten Alternative wird der Soll-Pfad t_{Soll} und/oder die Soll-Geschwindigkeit v_{Soll} in analoger Weise mittels des Fahrerassistenzsystems 8, insbesondere dessen Steuereinheit 18, bestimmt.

Anschließend wird das Kraftfahrzeug 4 in einem fünften Schritt S5 in Abhängigkeit der Soll-Geschwindigkeit v_{Soll} und/oder in Abhängigkeit des Soll-Pfads t_{Soll} anhand des Fahrerassistenzsystems 8 automatisch längs- und/oder querführt. Insbesondere wird die Geschwindigkeit des Kraftfahrzeugs 4 derart anhand des Fahrerassistenzsystems 8 geregelt, dass diese der Soll-Geschwindigkeit v_{Soll} entspricht. Zusätzlich oder alternativ hierzu wird der Pfad und/oder eine laterale Position des Kraftfahrzeugs 4 derart anhand des Fahrerassistenzsystems 8 geregelt, dass diese dem Soll-Pfad t_{Soll} entspricht.

Optional wird in einem anschließenden sechsten Schritt S6, während das Kraftfahrzeug 4 automatisch anhand des Fahrerassistenzsystems 8 längs- und/oder quergeführt wird, die Soll-Pfadabweichung Δt_{Soll} und/oder die Geschwindigkeitsabweichung Δv_{Soll} für eine vorgegebene dritte Zeitdauer vergrößert oder verkleinert. Diese Änderung erfolgt automatisch durch das Fahrerassistenzsystem 8 und basiert nicht auf einem Eingriff oder auf einer Eingabe des Fahrers.

Wenn während dieser dritten Zeitdauer kein manueller Eingriff des Fahrers in die Längs- und/oder Querführung während dieser Zeitdauer erfolgt, wird die Soll-Pfadabweichung Δt_{Soll} und/oder die Soll-Geschwindigkeitsabweichung Δv_{Soll} für eine zukünftige automatische Längs- und/oder Querführung vergrößert (wenn diese durch das Fahrerassistenzsystem 8 automatisch vergrößert wurde) oder verkleinert, also reduziert (wenn diese durch das Fahrerassistenzsystem 8 automatisch reduziert wurde). Zusammenfassend wird der Wert für die Soll-Pfadabweichung Δt_{Soll} und/oder der Wert für die Soll-Geschwindigkeitsabweichung Δv_{Soll} geändert und für eine zukünftige automatische Längs- und/oder Querführung verwendet.

Optional und zusätzlich oder alternativ zum sechsten Schritt S6 wird in einem siebten Schritt S7 bei einer manuellen Fahrt eine Ist-Geschwindigkeit v_{Ist} des Kraftfahrzeugs 4 und/oder ein Ist-Pfad t_{Ist} und vorzugsweise die aktuelle Fahrsituation F bestimmt. Weiterhin wird eine Ist-Geschwindigkeitsabweichung Δv_{Ist} der Ist-Geschwindigkeit v_{Ist} von der Schwarm-Geschwindigkeit v_{S} und/oder eine Ist-Pfadabweichung Δt_{Ist} des Ist-Pfads t_{Ist} zum Schwarm-Pfad t_{S} bestimmt. Beispielsweise wird das Verhältnis aus der Ist-Geschwindigkeit v_{Ist} und der Schwarm-Geschwindigkeit v_{S} als die Ist-Geschwindigkeitsabweichung Δv_{Ist} verwendet. Beispielsweise wird das Verhältnis aus dem Ist-Pfad t_{Ist} und dem Schwarm-Pfad t_{S} als die Ist-Pfadabweichung Δt_{Ist} verwendet.

Die Soll-Pfadabweichung Δt_{Soll} und/oder die Soll-Geschwindigkeitsabweichung Δv_{Soll} für eine zukünftige automatischen Längs- und/oder Querführung wird in Abhängigkeit der Ist-Geschwindigkeitsabweichung Δv_{Ist} und/oder der Ist-Pfadabweichung Δt_{Ist} eingestellt und/oder geändert, insbesondere lediglich dann, wenn die zukünftige Fahrsituation, in welcher zukünftig automatisch längs- und/oder quergeführt wird, der aktuellen Fahrsituation F entspricht. Beispielsweise wird hierzu während der aktuellen Fahrsituation F für zeitlich aufeinanderfolgende Zeitabschnitte, die jeweils eine vorgegebenen erste Zeitdauer andauern, die Ist-Geschwindigkeitsabweichung Δv_{Ist} und/oder die Ist-Pfadabweichung Δt_{Ist} bestimmt. Anhand dieser Ist-Geschwindigkeitsabweichungen Δv_{Ist} und/oder anhand dieser Ist-Pfadabweichungen Δt_{Ist} wird - beispielsweise durch Mittelwertbildung der Ist-Geschwindigkeitsabweichungen Δv_{Ist} bzw. der Ist-Pfadabweichungen Δt_{Ist} - ein erster Anpassungsfaktor K1 für die Soll-Pfadabweichung Δt_{Soll} und/oder für die Soll-Geschwindigkeitsabweichung Δv_{Soll} bestimmt, hier berechnet. Für die Bestimmung des ersten Anpassungsfaktors K1 wird dabei eine vorgegebene erste Anzahl der (zeitlich) letzten Zeitabschnitte verwendet.

Bei der Bestimmung des Soll-Pfads t_{Soll} und/oder der Soll-Geschwindigkeit v_{Soll} wird die Soll-Pfadabweichung Δt_{Soll} und/oder die Soll-Geschwindigkeitsabweichung Δv_{Soll} mit dem ersten Anpassungsfaktor K1 multipliziert. Eine derartige Bestimmung des Soll-Pfads t_{Soll} und/oder der Soll-Geschwindigkeit v_{Soll} wird dabei lediglich für eine zweite Zeitdauer, also nur zeitweise durchgeführt. Also wird die Soll-Pfadabweichung Δt_{Soll} und/oder die Soll-Geschwindigkeitsabweichung Δv_{Soll} lediglich für die zweite Zeitdauer anhand des ersten Anpassungsfaktors K1 angepasst.

Beispielsweise beträgt erste Zeitdauer 0,1 s, 1,0 s oder 10 s Beispielsweise beträgt die zweite Zeitdauer 15 min, 1 h, 1 Tag oder bis zum Ende der Fahrt.

Zusätzlich oder alternativ hierzu wird die Soll-Pfadabweichung Δt_{Soll} und/oder die Soll-Geschwindigkeitsabweichung Δv_{Soll} anhand eines zweiten Anpassungsfaktors K2 angepasst, welcher anhand einer zweiten Anzahl an Ist-Geschwindigkeitsabweichungen Δv_{Ist} und/oder Ist-Pfadabweichungen der (zeitlich) letzten Zeitabschnitte bestimmt wird. Dabei ist die zweite Anzahl größer als die erste Anzahl. Zusammenfassend werden für die Bestimmung des zweiten Anpassungsfaktors K2 mehr Ist-Geschwindigkeitsabweichungen Δv_{Ist} und/oder mehr Ist-Pfadabweichungen verwendet als bei der Bestimmung des ersten Anpassungsfaktors K1. In analoger Weise zur Bestimmung des ersten Anpassungsfaktors K1 erfolgt die Bestimmung des zweiten Anpassungsfaktors K2 beispielswiese durch Mittelwertbildung dieser Ist-Geschwindigkeitsabweichungen Δv_{Ist} und/oder dieser Ist-Pfadabweichungen Δt_{Ist}.

Bei der Bestimmung des Soll-Pfads t_{Soll} und/oder der Soll-Geschwindigkeit v_{Soll} wird die Soll-Pfadabweichung Δt_{Soll} und/oder die Soll-Geschwindigkeitsabweichung Δv_{Soll} mit dem zweiten Anpassungsfaktor K1 multipliziert.

Die Erfindung ist nicht auf die vorstehend beschriebenen Ausführungsbeispiele beschränkt. Vielmehr können hieraus im Rahmen der Ansprüche auch andere Varianten der Erfindung vom Fachmann abgeleitet werden, ohne den Gegenstand der Erfindung zu verlassen. Insbesondere sind ferner alle im Zusammenhang mit den Ausführungsbeispielen und/oder in den Ansprüchen beschriebenen Einzelmerkmale auch auf andere Weise miteinander kombinierbar, ohne den Gegenstand der Erfindung zu verlassen.

### Bezugszeichenliste

- 2: System
- 4: Kraftfahrzeug
- 6: Server
- 8: Fahrerassistenzsystem
- 10: Antrieb
- 12: Bremse
- 14: Lenkung
- 16: Eingabeeinrichtung
- 18: Steuereinheit des Kraftfahrzeugs
- 20: Steuereinheit des Servers
- 22: computerlesbares Medium
- 24: Navigationssystem

- C1: bis C5Deskriptor
- D: Schwarmdaten
- E: Eingabe
- F: aktuelle Fahrsituation
- K1: erster Anpassungsfaktor
- K2: zweiter Anpassungsfaktor
- K_{F}: Klasse
- ID: Identifikator
- S: Datensatz
- tᵢ: Pfad
- t_{Ist}: Ist-Pfad
- t_{S}: Schwarm-Pfad
- t_{Soll}: Soll-Pfad
- vᵢ: Geschwindigkeit
- v_{Ist}: Ist-Geschwindigkeit
- v_{S}: Schwarm-Geschwindigkeit
- v_{Soll}: Soll-Geschwindigkeit
- Δt_{Ist}: Ist-Pfadabweichung
- Δt_{Soll}: Soll-Pfadabweichung
- Δv_{Ist}: Ist-Geschwindigkeitsabweichung
- Δv_{Soll}: Soll-Geschwindigkeitsabweichung

- S1: Bestimmung des Schwarm-Pfads und der Schwarm-Geschwindigkeit
- S2: Bestimmung des Identifikators
- S3: Bestimmung der Soll-Pfadabweichung und/oder der Soll-Geschwindigkeitsabweichung
- S4: Bestimmung des Soll-Pfads und/oder der Soll-Geschwindigkeit
- S5: Automatische Längs- und/oder Querführung
- S6: Automatische Änderung der Soll-Pfadabweichung und/oder der Soll-Geschwindigkeitsabweichung
- S7: Bestimmung von Anpassungsfaktoren

## Patentansprüche

1. Verfahren zum Betrieb eines Systems (2) mit einem Kraftfahrzeug (4) sowie mit einem Server (6),
- wobei Schwarmdaten (D) mit Datensätzen (S) auf dem Server (6) bereitgestellt sind, wobei jeder Datensatz (S) einen, insbesondere dem aktuellen Ort des Kraftfahrzeugs (4) zugeordneten, Pfad (tᵢ) und eine, insbesondere dem aktuellen Ort des Kraftfahrzeugs (4) zugeordnete, Geschwindigkeit (vᵢ) darstellt,
- wobei anhand der Schwarmdaten (D) ein Schwarm-Pfad (t_{S}) und eine Schwarm-Geschwindigkeit (v_{S}) bestimmt werden,
- wobei ein dem Fahrer des Kraftfahrzugs (4) zugeordneter Identifikator (ID) bestimmt wird,
- wobei in Abhängigkeit des Identifikators (ID) eine Soll-Pfadabweichung (Δt_{Soll}) zum Schwarm-Pfad (tₛ) und/oder eine Soll-Geschwindigkeitsabweichung (Δv_{Soll}) zur Schwarm-Geschwindigkeit (v_{S}) bestimmt wird,
- wobei anhand der Soll-Pfadabweichung (Δt_{Soll}) und anhand des Schwarm-Pfads (tₛ) ein Soll-Pfad (t_{Soll}) für das Kraftfahrzeug (4) bestimmt wird, und/oder wobei anhand der Soll-Geschwindigkeitsabweichung (Δv_{Soll}) und anhand der Schwarm-Geschwindigkeit (v_{S}) eine Soll-Geschwindigkeit (v_{Soll}) für das Kraftfahrzeug (4) bestimmt wird, und
- wobei das Kraftfahrzeug (4) in Abhängigkeit der Soll-Geschwindigkeit (v_{Soll}) und/oder des Soll-Pfads (t_{Soll}) anhand eines Fahrerassistenzsystems (8) automatisch längs- und/oder querführt wird.

2. Verfahren nach Anspruch 1,
**dadurch gekennzeichnet,**
- **dass** die aktuelle Fahrsituation (F) bestimmt wird, und
- **dass** die Soll-Pfadabweichung (Δt_{Soll}) und/oder die Soll-Geschwindigkeitsabweichung (Δv_{Soll}) in Abhängigkeit der aktuellen Fahrsituation (F) bestimmt wird.

3. Verfahren nach Anspruch 2,
**dadurch gekennzeichnet,**
**dass** zur Bestimmung der aktuellen Fahrsituation (F) ein Deskriptor (C1) des Kraftfahrzeugs (4), ein Deskriptor (C2) der Fahrzeugumgebung, ein Deskriptor (C3) des Fahrers, ein Deskriptor (C4) einer geplanten oder aktuell gefahrenen Route, und/oder ein Deskriptor (C5) der Straße verwendet wird.

4. Verfahren nach Anspruch 2 oder 3,
**dadurch gekennzeichnet,**
- **dass** zur Bestimmung der Soll-Pfadabweichung (Δt_{Soll}) und/oder der Soll-Geschwindigkeitsabweichung (Δv_{Soll}) die aktuelle Fahrsituation (F) klassifiziert wird, und
- **dass** ein Wert für die Soll-Pfadabweichung (Δt_{Soll}) und/oder ein Wert die Soll-Geschwindigkeitsabweichung (Δv_{Soll}) einer bei der Klassifizierung bestimmten Klasse (K_{F}) zugeordnet wird,
- wobei der dieser Klasse (K_{F}) zugeordnete Wert der Soll-Pfadabweichung (Δt_{Soll}) und/oder der dieser Klasse (K_{F}) zugeordnete Wert der Soll-Geschwindigkeitsabweichung (Δv_{Soll}) abhängig vom Identifikator (ID) ist.

5. Verfahren nach einem der Ansprüche 1 bis 4,
**dadurch gekennzeichnet,**
**dass** ein initialer Wert für die Soll-Pfadabweichung (Δt_{Soll}), und/oder ein initialer Wert für die Soll-Geschwindigkeitsabweichung (Δv_{Soll}) anhand einer Eingabe (E) des Fahrers bestimmt wird.

6. Verfahren nach einem der Ansprüche 1 bis 5,
**dadurch gekennzeichnet,**
- **dass** bei einer manuellen Fahrt eine Ist-Geschwindigkeit (v_{Ist}) des Kraftfahrzeugs (4) und/oder ein Ist- Pfad (t_{Ist}) bestimmt wird,
- **dass** eine Ist-Geschwindigkeitsabweichung (Δv_{Ist}) der Ist-Geschwindigkeit (v_{Ist}) von der Schwarm-Geschwindigkeit (v_{S}) und/oder eine Ist-Pfadabweichung (Δt_{Ist}) des Ist-Pfads (t_{Ist}) zum Schwarm-Pfad (t_{S}) bestimmt wird, und
- **dass** die Soll-Pfadabweichung (Δt_{Soll}) und/oder die Soll-Geschwindigkeitsabweichung (Δv_{Soll}) für eine zukünftige automatischen Längs- und/oder Querführung in Abhängigkeit der Ist-Geschwindigkeitsabweichung (Δv_{Ist}) und/oder der Ist-Pfadabweichung (Δt_{Ist}) eingestellt und/oder geändert wird.

7. Verfahren nach Anspruch 2 und 6,
**dadurch gekennzeichnet**
- **dass** während der aktuellen Fahrsituation (F) für aufeinanderfolgende Zeitabschnitte, die jeweils eine vorgegebene erste Zeitdauer andauern, jeweils die Ist-Geschwindigkeitsabweichung (Δv_{Ist}) und/oder die Ist-Pfadabweichung (Δt_{Ist}) bestimmt wird,
- wobei anhand der Ist-Geschwindigkeitsabweichungen (Δv_{Ist}) und/oder anhand der Ist-Pfadabweichungen (Δt_{Ist}) ein erster Anpassungsfaktor (K1) für die Soll-Pfadabweichung (Δt_{Soll}) und/oder für die Soll-Geschwindigkeitsabweichung (Δv_{Soll}) bestimmt wird, wobei die Soll-Pfadabweichung (Δt_{Soll}) und/oder für die Soll-Geschwindigkeitsabweichung (Δv_{Soll}), insbesondere lediglich, für eine zweite Zeitdauer anhand des ersten Anpassungsfaktors (K1) angepasst wird, und/oder
- wobei die Soll-Pfadabweichung (Δt_{Soll}) und/oder für die Soll-Geschwindigkeitsabweichung (Δv_{Soll}) anhand eines zweiten Anpassungsfaktors (K2) angepasst wird, welcher anhand einer Anzahl an Ist-Geschwindigkeitsabweichungen (Δv_{Ist}) und/oder Ist-Pfadabweichungen bestimmt wird, die größer als eine Anzahl an Ist-Geschwindigkeitsabweichungen (Δv_{Ist}) und/oder anhand der Ist-Pfadabweichungen (Δt_{Ist}) für die Bestimmung des ersten Anpassungsfaktors (K1) ist.

8. Verfahren nach einem der Ansprüche 1 bis 7,
**dadurch gekennzeichnet,**
- **dass** bei einer automatischen Längs- und/oder Querführung die Soll-Pfadabweichung (Δt_{Soll}) und/oder die Geschwindigkeitsabweichung (Δv_{Soll}) für eine vorgegebene dritte Zeitdauer vergrößert oder verkleinert wird, und
- **dass**, wenn kein manueller Eingriff des Fahrers in die Längs- und/oder Querführung während dieser Zeitdauer erfolgt, die Soll-Pfadabweichung (Δt_{Soll}) und/oder die Soll-Geschwindigkeitsabweichung (Δv_{Soll}) für eine zukünftige automatische Längs- und/oder Querführung vergrößert oder verkleinert wird.

9. Verfahren nach einem der Ansprüche 1 bis 8,
**dadurch gekennzeichnet,**
**dass** der Server (6) die Soll-Pfadabweichung (Δt_{Soll}) und/oder Soll-Geschwindigkeitsabweichung (Δv_{Soll}) bestimmt.

10. System (2) mit einem Kraftfahrzeug (4) und mit einem Server (6), wobei das Kraftfahrzeug (4) und der Server (6) Mittel (18, 20) zur Durchführung des Verfahrens nach einem der Ansprüche 1 bis 9 aufweisen.
